# EUROPEAN PATENT APPLICATION

(11) **EP 4 848 518 A1**
(43) Date of publication of application: **02.12.2026**
(21) Application number: 24919714.6
(22) Date of filing: 30.08.2024
(51) Int. Cl.: H02J 3/38, H02J 3/24, H02J 3/28, G06Q 50/06

(54) **MICROGRID CONTROL METHOD AND APPARATUS, MICROGRID, AND STORAGE MEDIUM**

(30) Priority: 22.01.2024 CN 202410090870
(71) Applicant: Sungrow Power Supply (Nanjing) Co., Ltd, Nanjing, Jiangsu 210012 (CN)
(72) Inventor: DONG, Chen, Nanjing, Jiangsu 210012 (CN); XU, Chengji, Nanjing, Jiangsu 210012 (CN); XIA, Yanhui, Nanjing, Jiangsu 210012 (CN)
(74) Representative: Zacco Norway AS
(86) International application number: PCT/CN2024/115761
(87) International publication number: WO 2025/156633

(57) **Abstract**

The present application discloses a microgrid control method and apparatus, a microgrid, and a storage medium. A power type energy storage device is connected within a microgrid, and the microgrid control method comprises: when it is determined that the microgrid is in an unplanned islanding mode, controlling the power type energy storage device to enter a power support mode, wherein the power type energy storage device charges and discharges the microgrid in the power support mode; when the power type energy storage device is in the power support mode, carrying out source-load power adjustment on the microgrid; and once the microgrid reaches a source-load power balance, controlling the power type energy storage device to exit the power support mode. According to the microgrid control method, during unplanned islanding of the microgrid, flexible source-load power adjustment can be carried out thereon within a relatively sufficient time frame, thereby ensuring the stable operation of the microgrid.

## Description

This application claims the priority to Chinese Patent Application No. 202410090870.6, titled "MICROGRID CONTROL METHOD AND APPARATUS, MICROGRID, AND STORAGE MEDIUM", filed on January 22, 2024 with the China National Intellectual Property Administration, which is incorporated herein by reference in its entirety.

### FIELD

The present disclosure relates to the field of microgrids, and in particular to a method and an apparatus for controlling a microgrid, a microgrid and a storage medium.

### BACKGROUND

A microgrid refers to a small power generation, distribution and consumption system including a power source, an electrical load, a power distribution facility, and a monitoring and protection device. Most microgrids may operate in a grid-connected mode or an off-grid mode. A grid-connected/off-grid switching mode of the microgrid includes an intentional (active) grid-connected to off-grid switching mode, an unintentional (passive) grid-connected to off-grid switching mode, and an intentional (active) off-grid to grid-connected switching mode.

For both the intentional grid-connected to off-grid switching and the intentional off-grid to grid-connected switching, an output power of a power source and a load within the microgrid may be manually adjusted before the operation, and the switching of modes is performed only after achieving a source-load power balance state, thereby avoiding impacts caused by a power imbalance amount during a mode switching process. For the unintentional grid-connected to off-grid switching, since disconnection from a public power grid is an emergency situation, at a moment when a grid-connected/off-grid switch is opened, the microgrid is required not only to withstand the impact caused by power imbalance amount at the moment within the microgrid but also to rapidly compensate for a system power imbalance caused by the passive off-grid through emergency control measures. Currently, there is no effective solution for the unintentional off-grid in the microgrids.

### SUMMARY

A method and an apparatus for controlling a microgrid, a microgrid and a storage medium are provided according to embodiments of the present disclosure. When the microgrid is in an unintentional off-grid state, the microgrid is capable of performing flexible source-load power adjustment within a relatively sufficient time period, thereby ensuring the stable operation of the microgrid.

In a first aspect, a method for controlling a microgrid is provided according to embodiments of the present disclosure. A power-type energy storage device is provided within the microgrid. The method for controlling the microgrid includes: controlling, in response to determining that the microgrid is in an unintentional off-grid state, the power-type energy storage device to enter a power support mode, where the power-type energy storage device performs charging and discharging power with respect to the microgrid in the power support mode; performing source-load power adjustment on the microgrid when the power-type energy storage device is in the power support mode; and controlling, after the microgrid achieves source-load power balance, the power-type energy storage device to exit the power support mode.

According to the embodiments in the first aspect of the present disclosure, before the determining that the microgrid is in the unintentional off-grid state, the method further includes: generating, based on disconnection of a switch at a point of common coupling in the microgrid, off-grid information of the microgrid; determining, based on the off-grid information, whether the microgrid is in an intentional off-grid state; and maintaining, in response to determining that the microgrid is in the intentional off-grid state, the current operating state of the microgrid.

According to any of the embodiments in the first aspect of the present disclosure, a maximum output power or a maximum absorption power of the power-type energy storage device is greater than a maximum power deficit generated by the microgrid within one source-load power adjustment cycle.

According to any of the embodiments in the first aspect of the present disclosure, the microgrid includes a point of common coupling for connecting to a public power grid and a feeder network connected to the point of common coupling, a power supply, an electrical load, and a non-power-type energy storage device are provided within the feeder network, and the power-type energy storage device is connected between the point of common coupling and the feeder network.

According to any of the embodiments in the first aspect of the present disclosure, the performing source-load power adjustment on the microgrid when the power-type energy storage device is in the power support mode includes: detecting and acquiring a power imbalance amount of the microgrid in real time, where the power imbalance amount is equal to a real-time output power of the power supply plus a real-time discharging power of the non-power-type energy storage device, minus a real-time load power of the electrical load, and minus a real-time charging power of the non-power-type energy storage device in the feeder network; adjusting, based on the power imbalance amount, a real-time charge-discharge power of the power-type energy storage device; and performing, based on the power imbalance amount, the source-load power adjustment on the microgrid.

According to any of the embodiments in the first aspect of the present disclosure, the adjusting, based on the power imbalance amount, the real-time charge-discharge power of the power-type energy storage device includes: adjusting the real-time charge-discharge power of the power-type energy storage device to be equal to the power imbalance amount.

According to any of the embodiments in the first aspect of the present disclosure, the performing, based on the power imbalance amount, the source-load power adjustment on the microgrid includes: decreasing the output power of the power supply in the feeder network and decreasing the discharging power of the non-power-type energy storage device in the feeder network in response to the power imbalance amount being positive, until the power imbalance amount is zero.

According to any of the embodiments in the first aspect of the present disclosure, the performing, based on the power imbalance amount, the source-load power adjustment on the microgrid includes: performing, in response to the power imbalance amount being negative, the source-load power adjustment in the following order until the power imbalance amount is zero: increasing the output power of the power supply in the feeder network; decreasing the charging power of the non-power-type energy storage device in the feeder network, and increasing the discharging power of the non-power-type energy storage device in the feeder network; and decreasing the electrical load in the feeder network by a controllable load amount, and cutting off a non-critical load in the electrical load.

In a second aspect, an apparatus for controlling a microgrid is provided according to the embodiments of the present disclosure. A power-type energy storage device is provided within the microgrid. The apparatus for controlling the microgrid includes a power support mode initiation module, a source-load power adjustment module, and a power support mode exit module. The power support mode initiation module is configured to control, in response to determining that the microgrid is in an unintentional off-grid state, the power-type energy storage device to enter a power support mode, where the power-type energy storage device performs charging and discharging power with respect to the microgrid in the power support mode. The source-load power adjustment module is configured to perform source-load power adjustment on the microgrid when the power-type energy storage device is in the power support mode. The power support mode exit module is configured to control, after the microgrid achieves source-load power balance, the power-type energy storage device to exit the power support mode.

In a third aspect, a microgrid is provided according to the embodiments of the present disclosure. The microgrid includes: a feeder network, where a power supply, an electrical load, and a non-power-type energy storage device are provided within the feeder network; a point of common coupling, configured to connect the feeder network to a public power grid; a power-type energy storage device, configured to be connected to the feeder network; and a controller, configured to be connected to the feeder network, the point of common coupling, and the power-type energy storage device, where the controller includes a memory and at least one processor, and the memory stores instructions; and where the instructions in the memory, when being called by the at least one processor, cause the controller to perform the method for controlling the microgrid according to any of the embodiments in the first aspect of the present disclosure.

In a fourth aspect, a computer-readable storage medium storing instructions is provided according to embodiments of the present disclosure. The instructions, when being executed by a processor, cause the processor to implement the method for controlling the microgrid according to any of the embodiments in the first aspect of the present disclosure.

For the method for controlling the microgrid according to the embodiments of the present disclosure, a power-type energy storage device is provided within the microgrid. When it is determined that the microgrid is in an unintentional off-grid state, the power-type energy storage device is controlled to enter a power support mode, and the power-type energy storage device is capable of charging and discharging power with respect to the microgrid in the power support mode. Due to a high charge-discharge rate of the power-type energy storage device, at a moment of unintentional off-grid, the power-type energy storage device releases or absorbs unbalanced power within the microgrid, providing power support for the microgrid for a duration ranging from seconds to minutes. In this way, a microgrid scheduling control system may switch an original operating mode of the energy storage system within sufficient time, and flexibly adjust the output power of the power source and the load requirements within the microgrid, decreasing a transient disturbance while achieving power balance, thereby ensuring safe and stable operation of the microgrid in an off-grid state. According to the adjustment manner dealing with the intentional off-grid of the microgrid, good control effect and control reliability can be achieved while reducing requirements for a response speed of communication, the control device, and the power electronic device within the microgrid control system.

### BRIEF DESCRIPTION OF THE DRAWINGS

To more clearly illustrate solutions in embodiments of the present disclosure or in the related technology, drawings to be used in the description of the embodiments or the related technology are briefly introduced hereinafter. Apparently, the drawings in the following description show merely some embodiments of the present disclosure, and other drawings may be obtained for those skilled in the art based on the structures shown in the drawings without any creative efforts.
FIG. 1 is a flowchart of a method for controlling a microgrid according to an embodiment of the present disclosure;
FIG. 2 is a schematic structural diagram of an apparatus for controlling a microgrid according to an embodiment of the present disclosure;
FIG. 3 is a schematic diagram of a hardware structure of a microgrid according to an embodiment of the present disclosure; and
FIG. 4 is a schematic diagram of a hardware structure of a controller in a microgrid according to an embodiment of the present disclosure.

The realization of the objectives, functional features and advantages of the present disclosure are further described in conjunction with the embodiments and with reference to the drawings.

### DETAILED DESCRIPTION

Hereinafter technical solutions in embodiments of the present disclosure are described clearly and completely in conjunction with the drawings in embodiments of the present disclosure. Apparently, the embodiments described are only some rather than all of the embodiments of the present disclosure. Based on the embodiments of the present disclosure, all other embodiments obtained by those skilled in the art without any creative work fall into the protection scope of the present disclosure.

It should be noted that all directional indications (such as up, down, left, right, front, back and the like) in the embodiments of the present disclosure are only used to explain a relative position relationship, movements, or the like between components under a particular attitude (as shown in the drawings). If the particular attitude changes, the directional indications change accordingly.

In addition, in the present disclosure, descriptions related to "first" and "second" and the like are only used for descriptive purposes, and should not be understood as indicating or implying the relative importance or implicitly indicating the number of the indicated technical features. Therefore, features defined with "first" and "second" may explicitly or implicitly include at least one of the features. In addition, the technical solutions of the various embodiments can be combined with each other, in the ways that can be implemented by those skilled in the art. When the combination of technical solutions is contradictory or cannot be implemented, it should be considered that such a combination of technical solutions does not exist and is not within the protection scope of the present disclosure.

A microgrid refers to a small power generation, distribution and consumption system including a power source, an electrical load, a power distribution facility, and a monitoring and protection device. Most microgrids may operate in a grid-connected mode or an off-grid mode. A grid-connected/off-grid switching mode of the microgrid includes an intentional (active) grid-connected to off-grid switching mode, an unintentional (passive) grid-connected to off-grid switching mode, and an intentional (active) off-grid to grid-connected switching mode.

The intentional grid-connected to off-grid switching refers to: pre-adjusting the microgrid to a source-load power balance state within the microgrid, causing an exchange power with a public power grid to approach zero, and then actively triggering an off-grid instruction, so as to achieve a smooth active grid-connected to off-grid switching process through a seamless switching strategy.

The unintentional grid-connected to off-grid switching refers to: when a fault occurs in the public power grid, the microgrid is passively disconnected from the power grid, a grid-connected/off-grid switch between the microgrid and the public power grid is disconnected, and source-load power adjustment needs to be rapidly performed within the microgrid to ensure safe and stable operation in an islanded state.

The intentional off-grid to grid-connected switching refers to: after the fault in the public power grid is cleared, the microgrid is connected to the public power grid through a quasi-synchronization paralleling operations, thereby improving power supply reliability of the microgrid.

Switching between the grid-connected operating mode and the off-grid operating mode of the microgrid directly affects the safety and stability of the microgrid. Therefore, how to ensure safety and stability during a grid-connected/off-grid switching process of the microgrid is a critical issue in microgrid operation and control technology.

Among the above three grid-connected/off-grid switching modes, for both the intentional grid-connected to off-grid switching and the intentional off-grid to grid-connected switching, an output power of power source and a load within the microgrid may be manually adjusted before the operation, and the switching of modes is performed only after achieving a source-load power balance state, thereby avoiding impacts caused by a power imbalance amount during a mode switching process.

For the unintentional grid-connected to off-grid switching, since disconnection from a public power grid is an emergency situation, at a moment when a grid-connected/off-grid switch is opened, the microgrid is required not only to withstand the impact caused by power imbalance amount at the moment within the microgrid, but also to rapidly compensate for a system power imbalance caused by the passive off-grid through emergency control measures. A microgrid with an energy storage device as a main power source is also required to switch the energy storage operating mode from a grid-following mode to a grid-forming mode.

Currently, there are two common methods for dealing with the unintentional off-grid of the microgrid. One method involves taking an emergency control measure (such as switching off a load) based on a power imbalance amount at a moment of off-grid to achieve source-load power balance within the microgrid. This method places high demands on the response speeds of communication, a control device, and a power electronic device (a total response time needs to be controlled within one hundred milliseconds). Furthermore, implementing the control measure introduces a new transient disturbance to a microgrid system. As a result, even if the microgrid system ultimately reaches a new equilibrium state, a significant oscillation in voltage and frequency of the microgrid system occurs during the transient process, affecting power supply quality of the electrical load in the microgrid and preventing seamless switching between the grid-connected mode and the off-grid mode of the microgrid. For example, when a power deficit is significant (e.g., exceeding 20% of a total load of the microgrid), the failure probability of control using this method is high. The other method involves, in response to detection of an unintentional off-grid, rapidly tripping peripheral switches for the energy storage device and a critical load branch according to a predetermined strategy, while tripping the peripheral switches for other loads and distributed power sources with anti-islanding protection. Only a tie line between the energy storage device and the critical load is retained, thereby ensuring the normal and stable operation of the energy storage device and critical load branch and achieving uninterrupted power supply to the critical load. However, this method causes other loads within the microgrid to directly lose power immediately and distributed power sources to trip due to a fault, thereby reducing power supply reliability of the microgrid.

A method for controlling a microgrid is provided according to the embodiments of the present disclosure. In the embodiments of the present disclosure, the microgrid may be a small-scale power grid having off-grid self-operation capability and being connected to a public power grid through a Point of Common Coupling (PCC). The microgrid may be, for example, a source-grid-load-storage integrated system, a zero-carbon park, or a photovoltaic-storage-charging integrated station.

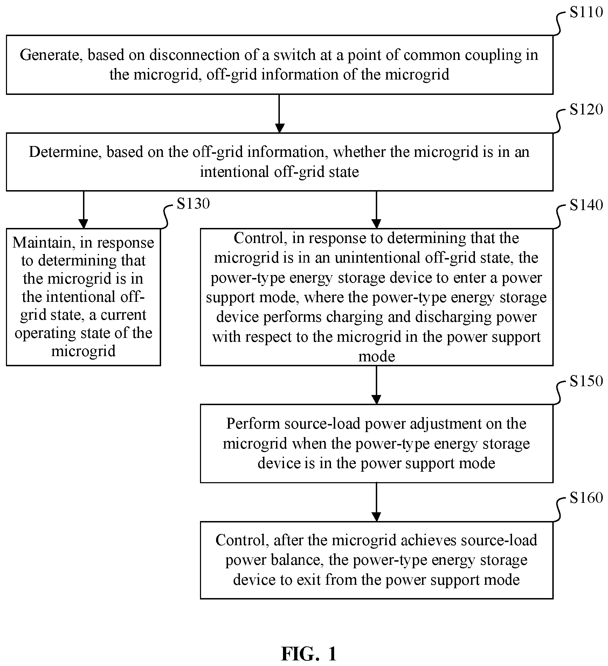

FIG. 1 is a flowchart of a method for controlling a microgrid according to an embodiment of the present disclosure. A power-type energy storage device is provided within the microgrid. The power-type energy storage device 220 is, for example, a supercapacitor, a flywheel energy storage device, or the like. The method for controlling the microgrid includes step S110 to step S160.

In step S110, off-grid information of the microgrid is generated based on disconnection of a switch at the PCC of the microgrid.

In step S120, based on the off-grid information, it is determined whether the microgrid is in an intentional off-grid state.

In step S130, in response to determining that the microgrid is in the intentional off-grid state, the current operating state of the microgrid is maintained.

In step S140, in response to determining that the microgrid is in an unintentional off-grid state, the power-type energy storage device is controlled to enter a power support mode, where the power-type energy storage device performs charging and discharging power with respect to the microgrid in the power support mode.

In step S150, source-load power adjustment is performed on the microgrid when the power-type energy storage device is in the power support mode.

When being in the power support mode, the power-type energy storage device performs charging and discharging power with respect to the microgrid, so as to temporarily maintain power balance within the microgrid.

In step S160, after the microgrid achieves source-load power balance, the power-type energy storage device is controlled to exit from the power support mode.

In some embodiments, the microgrid includes the PCC for connecting to the public power grid and a feeder network connected to the PCC, where a power supply, an electrical load, and a non-power-type energy storage device are provided within the feeder network. The power-type energy storage device is connected between the PCC and the feeder network. Since the power-type energy storage device is located near the PCC, communication latency is minimized, allowing a response time to be controlled within 10ms, thereby meeting requirements for seamless grid-connected/off-grid switching.

In some embodiments, a maximum output power or a maximum absorption power of the power-type energy storage device is greater than a maximum power deficit generated by the microgrid within one source-load power adjustment cycle.

In some embodiments, a duration required for the power-type energy storage device to operate in the power support mode may be determined based on a duration required for a main power source mode switching within the microgrid and a duration required for a source-load power adjustment process. The main power source mode switching means that, in a case that an energy-type energy storage device serves as the main power source during off-grid operation, the energy storage system needs to be switched from a grid-following mode to a grid-forming mode.

In some embodiments, the step S150 of performing source-load power adjustment on the microgrid when the power-type energy storage device is in the power support mode includes: detecting and acquiring a power imbalance amount P of the microgrid in real-time, where the power imbalance amount P is equal to a real-time output power P*_{source}* of the power supply plus a real-time discharging power P*_{storage-discharging}* of the non-power-type energy storage device, minus a real-time load power P*_{load}* of the electrical load, and minus a real-time charging power P*_{storage-charging}* of the non-power-type energy storage device in the feeder network, and the non-power-type energy storage device refers to other energy storage devices in the microgrid except for the power-type energy storage device; adjusting a real-time charge-discharge power of the power-type energy storage device based on the power imbalance amount P; and performing the source-load power adjustment on the microgrid based on the power imbalance amount P.

In some embodiments, the step of adjusting the real-time charge-discharge power of the power-type energy storage device based on the power imbalance amount P further includes: controlling the real-time charge-discharge power of the power-type energy storage device to be equal to the power imbalance amount P.

In some embodiments, the step of performing the source-load power adjustment on the microgrid based on the power imbalance amount P further includes: decreasing the output power of the power supply in the feeder network and decreasing the discharging power of the non-power-type energy storage device in the feeder network in response to the power imbalance amount P being positive, until the power imbalance amount P is zero.

In some embodiments, the step of performing the source-load power adjustment on the microgrid based on the power imbalance amount P further includes: performing, in response to the power imbalance amount P being negative, the source-load power adjustment in the following order until the power imbalance amount P is zero: increasing the output power of the power supply in the feeder network; decreasing the charging power of the non-power-type energy storage device in the feeder network, and increasing the discharging power of the non-power-type energy storage device in the feeder network; and decreasing the electrical load in the feeder network by a controllable load amount, and cutting off a non-critical load in the electrical load.

For the method for controlling the microgrid according to the embodiments of the present disclosure, a power-type energy storage device is provided within the microgrid. When it is determined that the microgrid is in an unintentional off-grid state, the power-type energy storage device is controlled to enter a power support mode, and the power-type energy storage device is capable of charging and discharging power with respect to the microgrid in the power support mode. Due to a high charge-discharge rate of the power-type energy storage device, at a moment of unintentional off-grid, the power-type energy storage device releases or absorbs unbalanced power within the microgrid, providing power support for the microgrid for a duration ranging from seconds to minutes. In this way, a microgrid scheduling control system may switch an original operating mode of the energy storage system within sufficient time, and flexibly adjust the output power of the power source and the load requirements within the microgrid, decreasing a transient disturbance while achieving power balance, thereby ensuring safe and stable operation of the microgrid in an off-grid state. According to the adjustment manner dealing with the intentional off-grid of the microgrid, good control effect and control reliability can be achieved while reducing requirements for a response speed of communication, the control device, and the power electronic device within the microgrid control system.

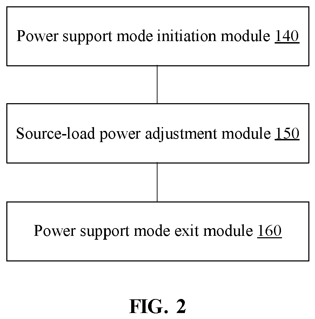

An apparatus for controlling a microgrid is further provided according to an embodiment of the present disclosure. FIG. 2 is a schematic structural diagram of an apparatus for controlling a microgrid according to an embodiment of the present disclosure. A power-type energy storage device is provided within the microgrid. The apparatus for controlling the microgrid includes a power support mode initiation module 140, a source-load power adjustment module 150, and a power support mode exit module 160.

The power support mode initiation module 140 is configured to control, in response to determining that the microgrid is in an unintentional off-grid state, the power-type energy storage device to enter a power support mode, where the power-type energy storage device performs charging and discharging power with respect to the microgrid in the power support mode.

The source-load power adjustment module 150 is configured to perform source-load power adjustment on the microgrid when the power-type energy storage device is in the power support mode.

The power support mode exit module 160 is used to control, after the microgrid achieves source-load power balance, the power-type energy storage device to exit from the power support mode.

For the apparatus for controlling the microgrid according to the embodiments of the present disclosure, a power-type energy storage device is provided within the microgrid. When it is determined by the power support mode activation module 140 that the microgrid is in an unintentional off-grid state, the power-type energy storage device is controlled to enter a power support mode, and the power-type energy storage device is capable of charging and discharging power with respect to the microgrid in the power support mode. Due to a high charge-discharge rate of the power-type energy storage device, at a moment of unintentional off-grid, the power-type energy storage device releases or absorbs unbalanced power within the microgrid, providing power support for the microgrid for a duration ranging from seconds to minutes. In this way, a microgrid scheduling control system may switch an original operating mode of the energy storage system within sufficient time, and flexibly adjust the output power of the power source and the load requirements within the microgrid, decreasing a transient disturbance while achieving power balance, thereby ensuring safe and stable operation of the microgrid in an off-grid state. According to the adjustment manner dealing with the intentional off-grid of the microgrid, good control effect and control reliability can be achieved while reducing requirements for a response speed of communication, the control device, and the power electronic device within the microgrid control system.

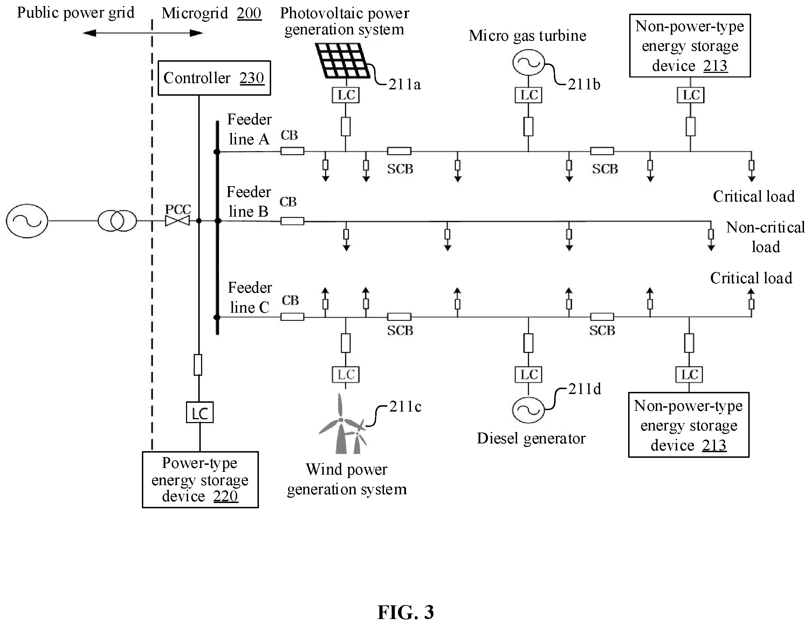

A microgrid is further provided according to an embodiment of the present disclosure. FIG. 3 is a schematic diagram of a hardware structure of a microgrid according to an embodiment of the present disclosure. The microgrid includes a feeder network, a point of common coupling PCC, a power-type energy storage device 220, and a controller 230.

A power supply, an electrical load, and a non-power-type energy storage device 213 are provided within the feeder network. The point of common coupling PCC is configured to connect the feeder network to the public power grid. The power-type energy storage device 220 is connected to the feeder network. The controller 230 is connected to the feeder network, the point of common coupling PCC, and the power-type energy storage device 220.

In some embodiments, the power-type energy storage device 220 is connected between the point of common coupling PCC and the feeder network. Since the power-type energy storage device 220 is located near the point of common coupling PCC, the communication latency can be minimized, allowing the response time to be controlled within 10ms, thereby meeting the requirements for seamless grid-connected/off-grid switching.

The feeder network may include multiple feeder lines, such as a feeder line A, a feeder line B, a feeder line C, where each of the feeder lines may be provided with a circuit breaker CB and a sectionalizing circuit breaker SCB. The power supply in the feeder network is, for example, a distributed power supply. In an embodiment, the power supply in the feeder network includes at least one of a photovoltaic power generation system 211a, a micro gas turbine 211b, a wind power generation system 211c, or a diesel generator 211d. Each power supply may be connected to the microgrid 200 via a local controller LC. The electrical load may include a critical load and a non-critical load. For example, the non-power-type energy storage device 213 is an energy-type storage energy device.

The power-type energy storage device 220 is, for example, a supercapacitor, a flywheel energy storage device or the like.

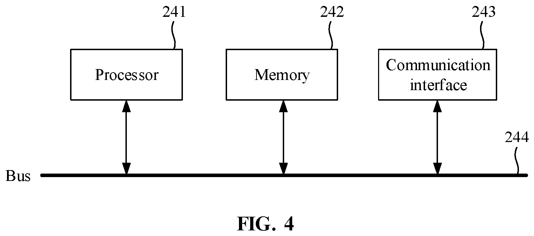

FIG. 4 is a schematic diagram of a hardware structure of a controller in a microgrid according to an embodiment of the present disclosure. The controller 230 includes a memory 231 and at least one processor 232. The memory 231 stores instructions, and the at least one processor 232 calls the instructions from the memory 231, to cause the controller 230 to perform the method for controlling the microgrid according to any of the above embodiments of the present disclosure.

A power-type energy storage device is provided within the microgrid. The method for controlling the microgrid includes: controlling, in response to determining that the microgrid is in an unintentional off-grid state , the power-type energy storage device to enter a power support mode, where the power-type energy storage device performs charging and discharging power with respect to the microgrid in the power support mode; performing source-load power adjustment on the microgrid when the power-type energy storage device is in the power support mode; and controlling, after the microgrid achieves source-load power balance, the power-type energy storage device to exit from the power support mode.

In an embodiment, the processor 232 may include a central processing unit (CPU) or an application specific integrated circuit (ASIC). Alternatively, the processor 232 may be configured as one or more integrated circuits for implementing the embodiments of the present disclosure.

The memory 231 may include a mass memory 231 for data or instructions. The memory 231 may include but is not limited to: a hard disk drive (HDD), a floppy disk drive, a flash memory, an optical disk, a magneto-optic disk, a tape, a universal serial bus (USB) drive, or a combination of two or more of the above. The memory 231 may include a removable or non-removable (or fixed) medium in appropriate conditions. The memory 231 may be inside or outside the integrated gateway disaster recovery device in appropriate conditions. In an embodiment, the memory 231 is a non-volatile solid-state memory. In an embodiment, the memory 231 includes a read-only memory (ROM). The ROM may be a mask-programmed ROM, a programmable ROM (PROM), an erasable PROM (EPROM), an electrically erasable PROM (EEPROM), an electrically alterable ROM (EAROM), a flash memory, or a combination of two or more of the above in appropriate conditions.

In an embodiment, the controller may further include a communication interface 233 and a bus 234. The processor 232, the memory 231, and the communication interface 233 are connected to each other via the bus 234 and implement communication with each other.

The communication interface 233 is mainly used to implement communications between modules, apparatuses, units and/or devices in the embodiments of the present disclosure.

The bus 234 may include hardware, software, or both the hardware and the software, coupling components of an online data traffic billing device to each other. For example, the bus may include but is not limited to an accelerated graphics port (AGP) or other graphics buses, an enhanced industry standard architecture (EISA) bus, a front-side bus (FSB), a hyper transport (HT) interconnect bus, an industry standard architecture (ISA) bus, a wireless bandwidth interconnect bus, a low pin count (LPC) bus, a storage bus, a microchannel architecture (MCA) bus, a peripheral component interconnect (PCI) bus, a PCI-Express (PCI-X) bus, a serial advanced technology attachment (SATA) bus, a video electronics standards association local bus (VLB), other appropriate buses, or a combination of two or more of the above. The bus 234 may include one or more buses in appropriate conditions. Although specific buses are described and shown in the present disclosure, any appropriate bus or interconnect is applicable in the present disclosure.

Furthermore, in view of the method for controlling the microgrid in the above embodiments, a computer-readable storage medium is further provided according to an embodiment of the present disclosure to implement the method for controlling the microgrid. The computer-readable storage medium stores instructions that, when being executed by a processor, implement the method for controlling the microgrid according to any of the above embodiments.

A power-type energy storage device is provided within the microgrid. The method for controlling the microgrid includes: controlling, in response to determining that the microgrid is in an unintentional off-grid state, the power-type energy storage device to enter a power support mode, where the power-type energy storage device performs charging and discharging power with respect to the microgrid in the power support mode; performing source-load power adjustment on the microgrid when the power-type energy storage device is in the power support mode; and controlling, after the microgrid achieves source-load power balance, the power-type energy storage device to exit from the power support mode.

The present disclosure is not limited to the specific configurations and processes described above and illustrated in the drawings. For brevity, detailed descriptions of known methods are omitted. In the above embodiments, several specific steps are described and illustrated by way of example. However, the method of the present disclosure is not limited to the specific steps described and illustrated. Those skilled in the art may make various changes, modifications, and additions, or alter the order of the steps after understanding the spirit of the present disclosure.

Each functional block shown in the above structural block diagrams may be implemented in hardware, software, firmware, or a combination thereof. When implemented in hardware, the functional block may be, for example, an electronic circuit, an application specific integrated circuit (ASIC), a suitable firmware, plug-in, function card, and the like. When implemented in software, the elements in the present disclosure are programs or code segments that are used to perform required tasks. The program or the code segments may be stored in a machine-readable medium or transmitted over a transmission medium or communication link through a data signal carried in the carrier. The "machine-readable medium" may include any medium that can store or transfer information. Examples of the machine-readable medium include an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segments may be downloaded via a computer network such as the Internet and an intranet.

It should be further noted that the exemplary embodiments referred in the present disclosure describe some methods or systems based on a series of steps or devices. However, the present disclosure is not limited to the order of the above steps. That is, the steps may be performed in the order mentioned in the embodiments, or in an order different from the order in the embodiments, or multiple steps may be performed simultaneously.

The above embodiments only describe specific implementations of the present disclosure, and those skilled in the art may clearly understand that for the convenience and conciseness of the description, specific operation processes of systems, modules, and units described above may refer to the respective processes in the aforementioned method embodiments, and are not repeated herein. It should be understood that the protection scope of the present disclosure is not limited thereto. Those skilled in the art can easily think of various equivalent modifications or substitutions within the technical scope disclosed in the present disclosure, and these modifications or substitutions should be covered within the protection scope of the present disclosure.

## Claims

1. A method for controlling a microgrid, wherein a power-type energy storage device is provided within the microgrid, and the method comprises:
controlling, in response to determining that the microgrid is in an unintentional off-grid state, the power-type energy storage device to enter a power support mode, wherein the power-type energy storage device performs charging and discharging power with respect to the microgrid in the power support mode;
performing source-load power adjustment on the microgrid when the power-type energy storage device is in the power support mode; and
controlling, after the microgrid achieves source-load power balance, the power-type energy storage device to exit the power support mode.

2. The method for controlling the microgrid according to claim 1, wherein before the determining that the microgrid is in the unintentional off-grid state, the method further comprises:
generating, based on disconnection of a switch at a point of common coupling in the microgrid, off-grid information of the microgrid;
determining, based on the off-grid information, whether the microgrid is in an intentional off-grid state; and
maintaining, in response to determining that the microgrid is in the intentional off-grid state, the current operating state of the microgrid.

3. The method for controlling the microgrid according to claim 1, wherein a maximum output power or a maximum absorption power of the power-type energy storage device is greater than a maximum power deficit generated by the microgrid within one source-load power adjustment cycle.

4. The method for controlling the microgrid according to claim 1,
wherein the microgrid comprises a point of common coupling for connecting to a public power grid and a feeder network connected to the point of common coupling, and a power supply, an electrical load, and a non-power-type energy storage device are provided within the feeder network; and
wherein the power-type energy storage device is connected between the point of common coupling and the feeder network.

5. The method for controlling the microgrid according to claim 4, wherein the performing source-load power adjustment on the microgrid when the power-type energy storage device is in the power support mode comprises:
detecting and acquiring a power imbalance amount of the microgrid in real time, wherein the power imbalance amount is equal to a real-time output power of the power supply plus a real-time discharging power of the non-power-type energy storage device, minus a real-time load power of the electrical load, and minus a real-time charging power of the non-power-type energy storage device in the feeder network;
adjusting, based on the power imbalance amount, a real-time charge-discharge power of the power-type energy storage device; and
performing, based on the power imbalance amount, the source-load power adjustment on the microgrid.

6. The method for controlling the microgrid according to claim 5, wherein the adjusting, based on the power imbalance amount, the real-time charge-discharge power of the power-type energy storage device comprises:
adjusting the real-time charge-discharge power of the power-type energy storage device to be equal to the power imbalance amount.

7. The method for controlling the microgrid according to claim 5, wherein the performing, based on the power imbalance amount, the source-load power adjustment on the microgrid comprises:
decreasing the output power of the power supply in the feeder network and decreasing the discharging power of the non-power-type energy storage device in the feeder network, in response to the power imbalance amount being positive, until the power imbalance amount is zero.

8. The method for controlling the microgrid according to claim 5, wherein the performing, based on the power imbalance amount, the source-load power adjustment on the microgrid comprises:
performing, in response to the power imbalance amount being negative, the source-load power adjustment in the following order until the power imbalance amount is zero:
increasing the output power of the power supply in the feeder network;
decreasing the charging power of the non-power-type energy storage device in the feeder network, and increasing the discharging power of the non-power-type energy storage device in the feeder network; and
decreasing the electrical load in the feeder network by a controllable load amount, and cutting off a non-critical load in the electrical load.

9. An apparatus for controlling a microgrid, wherein a power-type energy storage device is provided within the microgrid, and the apparatus comprises:
a power support mode initiation module, configured to control, in response to determining that the microgrid is in an unintentional off-grid state, the power-type energy storage device to enter a power support mode, wherein the power-type energy storage device performs charging and discharging power with respect to the microgrid in the power support mode;
a source-load power adjustment module, configured to perform source-load power adjustment on the microgrid when the power-type energy storage device is in the power support mode; and
a power support mode exit module, configured to control, after the microgrid achieves source-load power balance, the power-type energy storage device to exit the power support mode.

10. A microgrid, comprising:
a feeder network, wherein a power supply, an electrical load, and a non-power-type energy storage device are provided within the feeder network;
a point of common coupling, configured to connect the feeder network to a public power grid;
a power-type energy storage device, configured to be connected to the feeder network; and
a controller, configured to be connected to the feeder network, the point of common coupling, and the power-type energy storage device, wherein the controller comprises a memory and at least one processor, and the memory stores instructions, wherein the instructions in the memory, when being called by the at least one processor, cause the controller to perform the method for controlling the microgrid according to any one of claims 1 to 8.

11. A computer-readable storage medium, storing instructions, wherein the instructions, when being executed by a processor, cause the processor to implement the method for controlling the microgrid according to any one of claims 1 to 8.
